# EUROPÄISCHE PATENTSCHRIFT

(11) **EP 3 599 350 B1**
(45) Veröffentlichungstag und Bekanntmachung des Hinweises auf die Patenterteilung: **24.08.2022**
(21) Anmeldenummer: 19184924.9
(22) Anmeldetag: 08.07.2019
(51) Int. Cl.: F01D 25/14, B33Y 80/00, F01D 25/26

(54) **TURBINENGEHÄUSE SOWIE VERFAHREN ZUM HERSTELLEN EINES TURBINENGEHÄUSES**
TURBINE HOUSING AND METHOD FOR PRODUCING A TURBINE HOUSING
CARTER DE TURBINE AINSI QUE PROCÉDÉ DE FABRICATION D'UN CARTER DE TURBINE

(30) Priorität: 23.07.2018 DE 102018212222
(43) Veröffentlichungstag der Anmeldung: 29.01.2020
(73) Patentinhaber: Siemens Energy Global GmbH & Co. KG, 81739 München (DE)
(72) Erfinder: Leidinger, Bernd, 01159 Dresden (DE)

(56) Entgegenhaltungen:
- EP-A1- 1 541 810
- EP-A1- 1 712 745
- DE-A1-102011 108 957

## Beschreibung

Die Erfindung betrifft ein Turbinengehäuse nach dem Oberbegriff des unabhängigen Patentanspruch 1 sowie ein Verfahren zum Herstellen eines solchen Turbinengehäuses nach dem Oberbegriff des unabhängigen Patentanspruchs 6.

Turbinengehäuse unterliegen während ihres Betriebes thermischen Beanspruchungen, insbesondere hohen Temperaturdifferenzen zwischen ihrer Innen- und ihrer Außenseite. Diese Beanspruchungen liegen häufig oberhalb der für das Auftreten von Kriecherscheinungen charakteristischen Temperaturen. Dies führt während des Betriebs zu Verformungen des Turbinengehäuses, durch welche beispielsweise Radialspiele zwischen dem Rotor und dem Turbinengehäuse aufgezehrt werden können. In einem solchen Zustand ist ein weiterer Betrieb der Turbine dann nicht mehr möglich.

Gegenwärtig gibt es mehrere Ansätze mit diesem Problem umzugehen:
- Eine Möglichkeit besteht darin, die Verformung des Turbinengehäuses in Form größerer Radialspalte zwischen den rotierenden und den feststehenden Teilen zu berücksichtigen. Hierdurch ergibt sich jedoch ein höherer Wirkungsgradverlust durch Leckagen des Arbeitsmediums.
- Ein weiterer Ansatz besteht in der Einschränkung des zulässigen Betriebsbereichs der Bauteile, vor allem hinsichtlich der zulässigen Temperaturdifferenzen. Hierdurch sind thermodynamisch sinnvolle Lösungen zum Teil nicht mehr realisierbar.
- Eine weitere Lösung besteht in der Fertigung der Bauteile aus Werkstoffen mit einem günstigeren Kriechverhalten. Diese sind üblicherweise aber teuer und führen dadurch zu erheblichen Mehrkosten beim Turbinengehäuse. Eine andere Möglichkeit das Problem in den Griff zu bekommen, besteht in der Bauteilabschirmung aus angeschraubten oder angeschweißten Blechkonstruktionen. Dies beinhaltet jedoch den Nachteil, der komplizierten Konstruktion und der erhöhten Anfälligkeit gegen Störungen.

Ein weiterer Ansatz besteht im Aufspritzen von Wärmedämmschichten. Die Wärmedämmschichten haben jedoch den Nachteil, dass die Beanspruchbarkeit durch beim Aufspritzen entstehende zufällige Mikrostrukturen unklar und nicht berechenbar ist. Die EP 1 541 810 A1 offenbart ein Turbinengehäuse mit einer Gehäusewandung, mit einem oberflächennahen Bereich und einem Gehäusekern, wobei das Turbinengehäuse im oberflächennahen Bereich der Gehäusewandung eine poröse Struktur mit definierten Hohlräumen aufweist.

Ausgehend vom zuvor beschriebenen Stand der Technik ist es Aufgabe der vorliegenden Erfindung, ein Turbinengehäuse bereitzustellen, welches sich auch bei hohen Temperaturdifferenzen wenig verformt.

Des Weiteren ist es Aufgabe der Erfindung, ein Verfahren zum Herstellen eines solchen Turbinengehäuses bereitzustellen.

Die Aufgabe wird hinsichtlich des Turbinengehäuses durch die Merkmale des unabhängigen Patentanspruchs 1 und hinsichtlich des Verfahrens durch die Merkmale des unabhängigen Patentanspruchs 6 gelöst.

Weitere Ausgestaltungen der Erfindung, die einzeln oder in Kombination miteinander einsetzbar sind, sind Gegenstand der Unteransprüche.

Das erfindungsgemäße Turbinengehäuse, umfassend wenigstens eine Gehäusewandung mit einem oberflächennahen Bereich und einem Gehäusekern, wobei das Turbinengehäuse zumindest bereichsweise im oberflächennahen Bereich der Gehäusewandung eine poröse Struktur mit definierten Hohlräumen aufweist, zeichnet sich dadurch aus, dass das Turbinengehäuse mittels eines additiven Fertigungsverfahrens hergestellt ist. Additive Fertigungsverfahren bilden den Vorteil, dass die Geometrie des Gehäuses auf einfache Weise mit hoher Fertigungsgenauigkeit hergestellt werden kann. Dabei können unterschiedliche Bereiche ein und desselben Bauteils unterschiedliche Strukturen aufweisen und somit gezielt beeinflusst werden. Als Oberflächennaher Bereich ist dabei eine Schicht zu sehen, die nicht dicker als 20 % vorzugsweise nicht dicker als 10 % der gesamten Gehäusewanddicke ist und sich von der Oberfläche des Turbinengehäuses in Richtung des Gehäusekerns erstreckt. Im Gegensatz zu den bislang verwendeten aufgespritzten Wärmedämmschichten ergeben sich keine unstrukturierten (zufälligen) porösen Strukturen ähnlich geschlossen porigem Schaum, sondern porösen Strukturen mit definierten Hohlräumen. d.h. die Geometrie der porösen Struktur ist im Rahmen der Fertigungsgenauigkeit vorbestimmt und damit an die Beanspruchbarkeit bestimmbar. Hierdurch lassen sich im Kern des Turbinengehäuses gezielt Temperaturdifferenzen und damit Verformungen reduzieren. Hierdurch kommt es zu einer deutlichen Verringerung der Verformung des Turbinengehäuses aufgrund von Temperaturdifferenzen.

Eine Ausgestaltung der Erfindung sieht vor, dass die Hohlräume kugelförmig, linsenförmig oder als Ellipsoid ausgebildet sind. Diese Geometrien lassen sich zum einen einfach Herstellen zum anderen bieten sie eine große Oberfläche bezogen auf ihr Volumen. Dies bietet Vorteile im Hinblick auf die Wärmedämmung.

Eine weitere Ausgestaltung der Erfindung sieht vor, dass die thermischen und/oder mechanischen Eigenschaften durch die Anzahl, Anordnung und Ausrichtung der Hohlräume gezielt beeinflussbar ist. So lässt sich beispielsweise Relativdehnung des Turbinengehäuses oder der Wärmefluss innerhalb des Turbinengehäuses beeinflussen.

Eine weitere Ausgestaltung der Erfindung sieht vor, dass mechanisch zu bearbeitende Bereiche und/oder Brücken zwischen tragenden Strukturelementen, wie beispielsweise Pollern und Konsolen und dem Gehäusekern aus Vollmaterial, d.h. ohne definierte Hohlräume ausgebildet sind. Hierdurch sind diese Bereiche mechanisch voll belastbar.

Eine weitere Ausgestaltung der Erfindung sieht vor, dass das Turbinengehäuse ein Innengehäuse einer Dampfturbine ist. Innengehäuse von Dampfturbinen unterliegen während ihres Betriebes besonders hohen thermischen Beanspruchungen, wodurch es häufig zu starken Verformungen des Turbinengehäuses kommt. Diese können durch die erfindungsgemäßen Merkmale vollständig eliminiert oder zumindest stark verringert werden.

Das erfindungsgemäße Verfahren zum Herstellen eines Turbinengehäuses zeichnet sich durch die folgenden Verfahrensschritte aus:
- Erstellen eines CAD-/CAM-Modells des Turbinengehäuses, wobei das Modell die definierten Hohlräume beinhaltet;
- Additive Fertigung es Turbinengehäuses anhand des CAD-/CAM-Modells.

Durch das erfindungsgemäße Verfahren kann bereits bei der Konstruktion des Turbinengehäuses mittels des CAD-/CAM-Tools die definierten Hohlräume exakt geplant und festgelegt werden. Das CAD-/CAM-Modell wird dann übertragen auf das Fertigungstool und das Turbinengehäuse wird anhand des CAD-/CAM-Modells durch die additive Fertigung fertig gestellt. Hierdurch ergeben sich Bauteile mit hoher Fertigungsgenauigkeit und vorbestimmbarer Beanspruchbarkeit.

Durch das erfindungsgemäße Turbinengehäuse und das erfindungsgemäße Verfahren zum Herstellen eines solchen Turbinengehäuses können erstmals Turbinengehäuse ausgebildet werden, bei denen die Wärmedämmung und die Tragfunktion in verschiedenen Bereichen ein und desselben Bauteils integriert sind. Hierdurch wird das Design der Baugruppe einfacher als z. B. beim Einsatz von Blechummantelungen. Aufgrund der geringeren Verformung des Turbinengehäuses können geringere Radialspalte zwischen den rotierenden und den feststehenden Teilen realisiert werden, wodurch sich eine Wirkungsgraderhöhung ergibt.

Nachfolgend wird die Erfindung anhand von Ausführungen und Beispielen näher erläutert. Es zeigt:
- FIG 1: ein erfindungsgemäßes Turbinengehäuseunterteil;
- FIG 2: das Detail x aus FIG 1;
- FIG 3: das Detail y aus FIG 1;
- FIG 4: das Detail z aus FIG 1.

Die Figuren zeigen vereinfachte Darstellungen des Turbinengehäuses. Dabei handelt es sich nicht zwangsläufig um eine maßstabgerechte Darstellung der Erfindung. Gleiche bzw. funktionsgleiche Teile sind figurübergreifend mit denselben Bezugszeichen versehen.

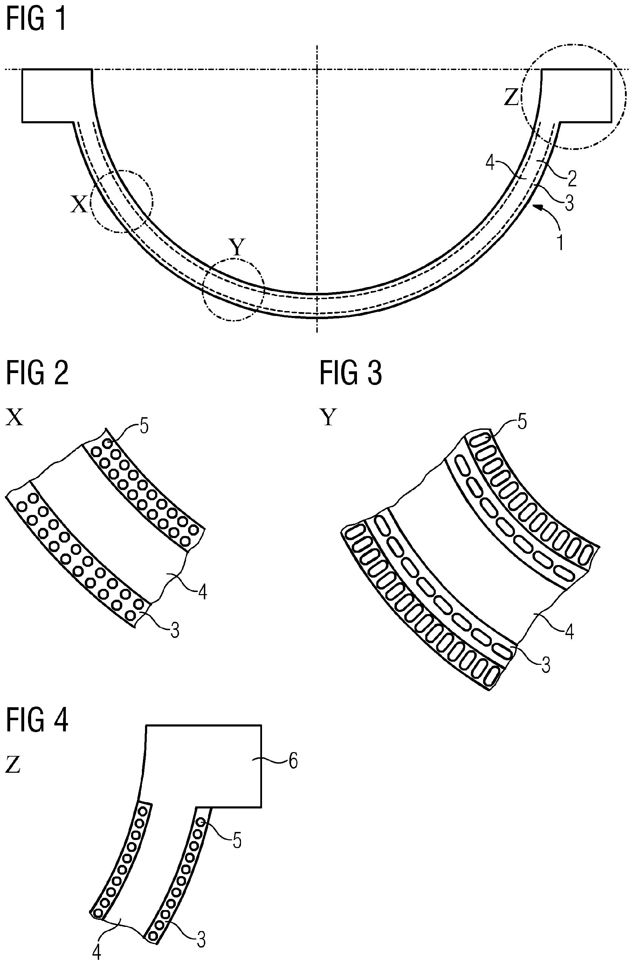

FIG 1 zeigt das Unterteil eines Turbinengehäuses 1, beispielsweise das Innengehäuse einer Dampfturbine. Das Turbinengehäuse 1 umfasst wenigstens eine Gehäusewandung 2 mit einem oberflächennahen Bereich 3 und einem Gehäusekern 4. Der oberflächennahe Bereich 3 erstreckt sich dabei oder der Oberfläche der Gehäusewandung 2 in Richtung des Gehäusekerns 4. Die Dicke des oberflächennahmen Bereichs ist vorzugsweise kleiner als 20 % besonders bevorzugt kleiner als 10 % der gesamten Dicke der Gehäusewandung 2. Der oberflächennahe Bereich 3 der Gehäusewandung 2 weist dabei eine poröse Struktur mit definierten Hohlräumen 5 auf. Die Hohlräume 5 können beispielsweise kugelförmig, linsenförmig als Ellipsoid oder wabenförmig ausgebildet sein. Grundsätzlich ist aber auch jede andere geometrische Form für die Hohlräume 5 denkbar. Durch die Anzahl, Anordnung und Ausrichtung der Hohlräume 5 kann die thermische und/oder mechanische Eigenschaft der porösen Struktur und damit der gesamten Gehäusewandung gezielt beeinflusst werden. Die poröse Schicht 5 kann dabei über die gesamte Länge der Gehäusewandung oder auch nur bereichsweise ausgebildet sein. Die definierten Hohlräume 5 können dabei gleichmäßig über den gesamten oberflächennahen Bereich verteilt oder gezielt im Hinblick auf die möglichen Eigenschaften des Turbinengehäuses in einzelnen Bereichen ausgebildet sein. Dabei können beispielsweise die mechanisch zu bearbeitenden Bereiche und/oder Brücken zwischen tragenden Strukturelementen 6, wie beispielsweise Pollern und Konsolen und dem Gehäusekern 4 aus Vollmaterial, d.h. ohne definierte Hohlräume ausgebildet sein.

Das Turbinengehäuse ist mittels eines additiven Fertigungsverfahrens hergestellt. Das additive Fertigungsverfahren ermöglicht es, auf besonders einfache Weise die definierten Hohlräume bereits bei der Konstruktion festzulegen und in ein entsprechendes CAD-/CAM-Modell einzufügen. Dies bietet den Vorteil, dass die Beanspruchbarkeit des Turbinengehäuses damit bereits vor der Herstellung vorbestimmbar und berechenbar ist.

Das erfindungsgemäße Turbinengehäuse ermöglicht es erstmals, die Wärmedämmung und die Tragfunktion in verschiedenen Bereichen ein und desselben Bauteils zu integrieren. Hierdurch kann auf die bislang notwendigen Maßnahmen, die zu einem erhöhten konstruktiven Aufwand und/oder zu erhöhten Mehrkosten führen, verzichtet werden.

FIG 2 bis FIG 4 zeigen Detailansichten möglicher Ausgestaltungen der porösen Struktur innerhalb des Turbinengehäuses 1.

FIG 2 zeigt eine poröse Struktur mit kugelförmigen Hohlräumen 5, die gleichmäßig innerhalb des oberflächennahen Bereichs 3 angeordnet sind. Durch die Anzahl, die Anordnung und die Größe der Hohlräume 5 kann ganz gezielt auf die thermischen oder mechanischen Eigenschaften des Turbinengehäuses in diesem Bereich eingegangen werden. Die Hohlräume sind dabei ausschließlich im oberflächennahen Bereich 3 eingebracht. Der Gehäusekern 4 besteht weiterhin aus einem Vollmaterial.

FIG 3 zeigt eine zweite Detailansicht einer möglichen porösen Struktur innerhalb des Turbinengehäuses 1. Die Hohlräume 5 sind dabei linsenförmig bzw. Ellipsoid ausgebildet. Die so ausgebildeten Hohlräume können je nach Ausrichtung die thermischen und/oder mechanischen Eigenschaften weiter positiv beeinflussen. So sorgt beispielsweise die Anordnung der in Radialrichtung angeordneten ellipsoiden Hohlräume 5 für eine verringerte Relativdehnung des Turbinengehäuses 1, wodurch es zu geringeren Ausdehnungen und damit zu Vermeidung von Spaltüberbrückungen zwischen den rotierenden und den feststehenden Bauteilen innerhalb der Turbine kommt. Eine Anordnung der linsenförmigen Hohlräume 5 in Umfangsrichtung sorgt dagegen für eine bessere Wärmedämmung und behindert somit den Wärmefluss innerhalb der Gehäusewandung 1. Dies führt ebenfalls zu einer geringeren Ausdehnung und Verformung des Turbinengehäuses 1.

FIG 4 zeigt eine weitere Detailansicht eines möglichen oberflächennahen Bereichs 3, in der Nähe des Turbinengehäuseflansches 6. Dabei ist der oberflächennahe Bereich in dem die Hohlräume 5 eingebracht sind nur kurz bis vor den Flansch 6 ausgebildet. Der Flansch 6 ist aus Vollmaterial, d. h. ohne Hohlräume 5 ausgebildet, wodurch er voll belastbar ist, was insbesondere beim Verschrauben der beiden Turbinengehäusehälften wichtig ist um im Teilfugenbereich eine Dichtigkeit zu erzielen.

Grundsätzlich sollten alle mechanisch zu bearbeitenden Bereich und/oder Brücken zwischen tragenden Strukturelementen 6, wie beispielsweise dem Flansch oder Pollern und Konsolen und dem Gehäusekern aus Vollmaterial, d. h. ohne definierte Hohlräume ausgebildet sein, um die entsprechende Tragfunktion zu gewährleisten.

Das erfindungsgemäße Verfahren zum Herstellen des Turbinengehäuses sieht vor, dass zunächst das Turbinengehäuse 1, einschließlich der definierten Hohlräume 5 mittels eines CAD-/CAM-Modells erstellt wird, und anschließend anhand des CAD-/CAM-Modells mittels eines additiven Verfahrens das Turbinengehäuse 1 ausgebildet wird. Der wesentliche Vorteil besteht darin, dass die Beanspruchbarkeit des Turbinengehäuses 1 und der einzelnen Bereiche des Turbinengehäuses 1 bzw. der Gehäusewandung 2 bereits bei der Konstruktion bestimmbar/berechenbar ist. Hierdurch wird es erstmals ermöglicht, ein Turbinengehäuse 1 herzustellen, bei dem Wärmedämmung und Tragfunktion in verschiedenen Bereichen ein und desselben Bauteils integriert sind.

## Patentansprüche

1. Turbinengehäuse (1), umfassend wenigstens eine Gehäusewandung (2) mit einem oberflächennahen Bereich (3) und einem Gehäusekern (4), wobei
das Turbinengehäuse (1) zumindest bereichsweise im oberflächennahen Bereich (3) der Gehäusewandung (2) eine poröse Struktur mit definierten Hohlräumen (5) aufweist,
**dadurch gekennzeichnet, dass**
das Turbinengehäuse (1) mittels eines additiven Fertigungsverfahrens hergestellt ist.

2. Turbinengehäuse (1) nach Anspruch 1,
**dadurch gekennzeichnet, dass**
die Hohlräume (5) kugelförmig, linsenförmig oder als Ellipsoid ausgebildet sind.

3. Turbinengehäuse (1), nach Anspruch 1 oder 2,
**dadurch gekennzeichnet, dass**
die thermischen und/oder mechanischen Eigenschaften durch die Anzahl, Anordnung und Ausrichtung der Hohlräume (5) gezielt beeinflusst ist.

4. Turbinengehäuse (1), nach einem der vorherigen Ansprüche,
**dadurch gekennzeichnet, dass**
mechanisch zu bearbeitende Bereiche und/oder Brücken zwischen tragenden Strukturelementen (6) wie beispielsweise Poller und Konsolen und dem Gehäusekern (4) aus Vollmaterial, d.h. ohne definierte Hohlräume (5) ausgebildet sind.

5. Turbinengehäuse (1), nach einem der vorherigen Ansprüche,
**dadurch gekennzeichnet, dass**
das Turbinengehäuse (1) ein Innengehäuse einer Dampfturbine ist.

6. Verfahren zum herstellen eines Turbinengehäuses (1) nach einem der Ansprüche 1 bis 5,
**gekennzeichnet, durch** die folgenden Verfahrensschritte:
- Erstellen eines CAD-/ CAM-Modells des Turbinengehäuses (1) wobei das Modell die definierten Hohlräume (5) beinhaltet;
- Additive Fertigung des Turbinengehäuses (1) anhand des CAD-/ CAM-Modells.

## Claims

1. Turbine housing (1) comprising at least one housing wall (2) having a region (3) close to the surface and having a housing core (4), wherein
the turbine housing (1) has a porous structure with defined cavities (5) at least regionally in the region (3) close to the surface of the housing wall (2),
**characterized in that**
the turbine housing (1) is produced by means of an additive manufacturing process.

2. Turbine housing (1) according to Claim 1,
**characterized in that**
the cavities (5) are of spherical, lenticular or ellipsoidal form.

3. Turbine housing (1) according to Claim 1 or 2, **characterized in that**
the thermal and/or mechanical properties are influenced in a targeted manner by the number, arrangement and orientation of the cavities (5).

4. Turbine housing (1) according to one of the preceding claims,
**characterized in that**
to-be-machined regions and/or bridges between supporting structure elements (6), such as for example bollards and consoles and the housing core (4), are formed from solid material, that is to say without defined cavities (5).

5. Turbine housing (1) according to one of the preceding claims,
**characterized in that**
the turbine housing (1) is an inner housing of a steam turbine.

6. Method for producing a turbine housing (1) according to one of Claims 1 to 5,
**characterized by** the following method steps:
- creating a CAD/CAM model of the turbine housing (1), wherein the model incorporates the defined cavities (5),
- additively manufacturing the turbine housing (1) on the basis of the CAD/CAM model.

## Revendications

1. Carter de turbine (1), comportant au moins une paroi de carter (2) avec une zone (3) proche de la surface et une partie centrale de carter (4),
le carter de turbine (1) comprenant, au moins par zones dans la zone (3) proche de la surface de la paroi de carter (2), une structure poreuse avec des cavités (5) définies, **caractérisé en ce que**
le carter de turbine (1) est produit au moyen d'un procédé de fabrication additive.

2. Carter de turbine (1) selon la revendication 1,
**caractérisé en ce que**
les cavités (5) sont réalisées sous forme sphérique, sous forme lenticulaire ou sous forme d'ellipsoïde.

3. Carter de turbine (1) selon la revendication 1 ou la revendication 2,
**caractérisé en ce que**
les propriétés thermiques et/ou mécaniques sont influencées de manière ciblée par le nombre, l'agencement et l'orientation des cavités (5).

4. Carter de turbine (1) selon l'une des revendications précédentes,
**caractérisé en ce que**
les zones à usiner mécaniquement et/ou les ponts entre les éléments de structure porteurs (6), comme par exemple les bornes et les consoles, et la partie centrale de carter (4) sont réalisés en matériau plein, c'est-à-dire sans cavités (5) définies.

5. Carter de turbine (1) selon l'une des revendications précédentes,
**caractérisé en ce que**
le carter de turbine (1) est un carter interne d'une turbine à vapeur.

6. Procédé pour la production d'un carter de turbine (1) selon l'une des revendications 1 à 5,
**caractérisé par** les étapes de procédé suivantes :
- création d'un modèle CAD/CAM du carter de turbine (1), dans lequel le modèle contient les cavités (5) définies ;
- fabrication additive du carter de turbine (1) à l'aide du modèle CAD/CAM.
